# EUROPEAN PATENT APPLICATION

(11) **EP 4 779 127 A1**
(43) Date of publication of application: **22.07.2026**
(21) Application number: 26152145.4
(22) Date of filing: 15.01.2026
(51) Int. Cl.: F01D 11/00, F16J 15/3288

(54) **BRUSH SEAL WITH INTEGRAL COOLING CHANNEL AND METHOD**

(30) Priority: 15.01.2025 US 202519023125
(71) Applicant: RTX Corporation, Farmington, CT 06032 (US)
(72) Inventor: LILES, Howard J., Newington, 06111 (US)
(74) Representative: Dehns

(57) **Abstract**

A brush seal (200; 201; 202; 330) of a turbine engine (20) may provide a cooling flow (255; 355) to a ceramic matrix composite (CMC) component (210; 310; 320) that has a hot side (212; 312) configured for exposure to a hot gas path of the turbine engine (20) and an opposing cold side (214). The brush seal (200...330) includes an inner diameter (ID) backing plate (220) providing a radial face seal (217) across a cavity (216) in the CMC component (210; 310; 320), with the cavity (216) having an entrance disposed on the cold side (214) to receive the cooling flow (255; 355). The brush seal (200...330) also has an outer diameter (OD) backing plate (230), a plurality of brush seal bristles (240) disposed between the ID backing plate (220) and OD backing plate (230) and attached thereto in a welding zone, and a hole (250; 251; 252; 350) extending through the OD backing plate (230), the brush seal bristles (240), and the ID backing plate (220) in the welding zone to provide the cooling flow (255; 355) to the cavity (216) of the CMC component (210; 310; 320).

## Description

### FIELD OF THE INVENTION

The subject matter disclosed herein relates to providing cooling flow to ceramic matrix composite (CMC) components and, in particular, to providing dedicated cooling flow ingress through a brush seal.

### BACKGROUND OF THE INVENTION

Gas turbine engines or jet engines, in general, include a fan section, a compressor section, a combustion section, and a turbine section. Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and to drive the compressor and fan sections.

Certain components of gas turbine engines are thus exposed to the high-energy, high temperature gas flow (flow path components). Therefore, it is desirable that such components be made of heat-resistant materials such as ceramic matrix composites (CMCs). CMC components can withstand much higher operating temperatures than components composed of superalloys. However, CMC components have comparably lower thermal conductivity. To increase their operational lifespans, precautions can be taken to cool CMC components by subjecting the components to a flow of cooling fluid (e.g., air).

To provide cooling of CMC components, secondary air flows, i.e., secondary to the main flow of high-energy, high temperature gas, can be used to cool components of the gas turbine engines that are exposed to high temperatures as well as to prevent high temperature gas from reaching those components that are not directly exposed to the hot gas flow. To facilitate the cooling of the CMC components, cavities or channels can be provided within the components themselves to allow secondary cooling air to flow from one region to another region of the turbine. For example, a component such as a blade outer air seal (BOAS) can be provided with an internal cooling cavity or channel to allow cooling air to flow to a region between the engine casing and the outer radial surface of the BOAS into the internal cooling cavity of the BOAS to cool the interior of the component and thereby reduce its thermal deterioration due to exposure to the hot gas path.

However, given the packaging constraints within a turbine engine, the sensitivity of CMC materials to machined features, and the manufacturing difficulties involved with providing cooling circuit components with non-machining techniques (e.g., casting-like processes and the like), feeding of the cooling flow to the internal cavity of the CMC component may be difficult.

Additionally, CMC BOAS and CMC vane platforms require sealing to adjacent turbine components. These seals minimize leakage between stages and can often be in the form of axial brush seals. Brush seals are desirable seals to interfaces with CMC components due to their compliant nature and high temperature capability, but these axial brush seals can cover a portion of the BOAS and/or vane platform and impact the heat transfer at the covered locations. Furthermore, the brush seals can create additional challenges in directing cooling flows to regions of the platforms for film cooling at the covered locations.

The above information disclosed in this Background section is only for understanding of the background of the inventive concepts and, therefore, it may contain information that does not constitute prior art.

### SUMMARY OF THE INVENTION

An aspect of the present invention is directed to a brush seal for a ceramic matrix composite (CMC) component of a turbine engine, wherein the CMC component has a hot side configured for exposure to a hot gas path of the turbine engine and an opposing cold side. The brush seal includes an inner diameter (ID) backing plate configured to provide a radial face seal across a cavity in the CMC component, the cavity having an entrance disposed on the cold side configured for receiving the cooling flow. The brush seal further includes an outer diameter (OD) backing plate, a plurality of brush seal bristles disposed between the ID backing plate and OD backing plate and attached thereto in a welding zone, and at least one hole extending through the OD backing plate, the brush seal bristles, and the ID backing plate in the welding zone and positioned to provide the cooling flow to the cavity of the CMC component.

In an embodiment of the above brush seal, the at least one hole may be round.

In an embodiment of any of the above, the at least one hole may be straight.

In an embodiment of any of the above, the at least one hole may be angled with respect to a plane of the radial face seal.

In an embodiment of any of the above, the at least one hole may include a diffused feed portion to reduce impingement cooling in the cavity.

In an embodiment of any of the above, the at least one hole may be configured for impingement cooling of the cavity which forms a plenum that feeds a plurality of film cooling holes extending to the hot side of the CMC component.

In an embodiment of any of the above, the at least one hole may be further configured for feeding a cooling flow for a mateface purge hole in the CMC component.

In an embodiment of any of the above, the at least one hole may be further configured for feeding a cooling flow for an additional cooling circuit in the CMC component or an adjacent CMC component.

In an embodiment of any of the above, the brush seal may be configured to form the face seal against a CMC blade outer air seal (BOAS) as the CMC component with the cavity and the plurality of brush seal bristles may be configured to form a first seal against the CMC BOAS and a second seal against an adjacent CMC vane platform.

In an embodiment of any of the above, the brush seal may be configured to form the face seal against a CMC vane platform as the CMC component with the cavity and the plurality of brush seal bristles may be configured to form a first seal against the CMC vane platform and a second seal against an adjacent CMC blade outer air seal (BOAS).

In another aspect of the present invention, an apparatus for a turbine engine comprises a ceramic matrix composite (CMC) component and the brush seal of any of the above aspect and embodiments, the CMC component ) having a hot side configured for exposure to a hot gas path of the turbine engine and an opposing cold side.

Another aspect of the present invention is directed to a method of providing a cooling flow to a ceramic matrix composite (CMC) component of a turbine engine through a brush seal, wherein the CMC component has a hot side configured for exposure to a hot gas path of the turbine engine and an opposing cold side. The method includes providing at least one cavity in the CMC component, the at least one cavity having an entrance disposed on the cold side for receiving the cooling flow, disposing the brush seal adjacent the at least one cavity and the cold side of the CMC component to provide a radial face seal across the cavity of the CMC component, and passing the cooling flow from a source through at least one hole extending through the brush seal to provide the cooling flow to the at least one cavity of the CMC component.

In an embodiment of the above method, providing at least one cavity in the CMC component may include providing a film cooling supply plenum.

In an embodiment of any of the above, the method may include passing the cooling flow through the at least one hole provides impingement cooling of the film cooling supply plenum and the film cooling supply plenum may feed a plurality of film cooling holes extending to the hot side of the CMC component to provide film cooling.

In an embodiment of any of the above, the film cooling supply plenum may feed a plurality of film cooling holes extending to the hot side of the CMC component to provide film cooling.

In an embodiment of any of the above, providing the cooling flow to the at least one cavity of the CMC component may include passing the cooling flow at an angle with respect to a plane of the face seal.

In an embodiment of any of the above, providing the cooling flow to the at least one cavity of the CMC component may include providing the cooling flow to an entrance conduit that feeds a hollow core configured for providing cooling flow to the CMC component.

In an embodiment of any of the above, providing the cooling flow to the at least one cavity of the CMC component may include passing the cooling flow through a diffused feed hole.

Another aspect of the present invention is directed to a cooling flow arrangement for a ceramic matrix composite (CMC) component of a turbine engine, wherein the CMC component has a hot side configured for exposure to a hot gas path of the turbine engine and an opposing cold side. The cooling flow arrangement includes a cavity formed in the CMC component, the cavity having an entrance disposed on the cold side configured for receiving a cooling flow, a brush seal disposed adjacent the cavity and the cold side of the CMC component and configured to provide a radial face seal across the cavity of the CMC component, the brush seal further comprising a plurality of brush seal bristles configured to form a first seal against the CMC component and a second seal against an adjacent CMC component, and a hole extending through the central portion of the brush seal and positioned to provide the cooling flow to the cavity of the CMC component. The cooling flow arrangement may comprise the CMC component for a turbine engine. The brush seal may be according to the above brush seal aspect and any of its embodiments.

In an embodiment of the cooling flow arrangement, the CMC component may be a CMC blade outer air seal (BOAS), the adjacent CMC component may be a CMC vane platform, and the cavity may include elements selected from a plurality of film cooling holes extending from the cavity to the hot side of the CMC BOAS, at least one conduit leading to another portion of the CMC BOAS, at least one conduit leading to an adjacent region of the turbine engine, and/or a conduit leading to a mateface purge hole.

In another embodiment of the cooling flow arrangement, the CMC component may be a CMC vane platform, the adjacent CMC component may be a CMC blade outer air seal (BOAS), and the cavity may include elements selected from a plurality of film cooling holes extending from the cavity to the hot side of the CMC vane platform, at least one conduit leading to another portion of the CMC vane platform, at least one conduit leading to an adjacent region of the turbine engine, and/or a conduit leading to a mateface purge hole.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 schematically illustrates a partial cross section of an exemplary gas turbine engine;
FIG. 2A schematically illustrates a partial cross section of an example embodiment of a brush seal in accordance with the present disclosure;
FIG. 2B schematically illustrates a partial cross section of another example embodiment of a brush seal in accordance with the present disclosure;
FIG. 2C schematically illustrates a partial cross section of a further example embodiment of a brush seal in accordance with the present disclosure;
FIG. 2D schematically illustrates a partial cross section of yet another example embodiment of a brush seal for one or more cooling flow arrangements in accordance with the present disclosure;
FIG. 3A schematically illustrates a cross section of an example embodiment of a CMC BOAS with brush seals in accordance with the present disclosure;
FIG. 3B schematically illustrates a cross section of another example embodiment of CMC vane platforms with brush seals in accordance with the present disclosure; and
FIG. 4 is a flow diagram of an example process in accordance with the present disclosure.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art.

The following discussion omits or only briefly describes conventional features of the disclosed technology that are apparent to those skilled in the art. Reference to a particular embodiment does not limit the scope of the claims attached hereto. Additionally, any examples set forth in this specification are intended to be non-limiting and merely set forth some of the many possible embodiments for the appended claims. Further, particular features described herein can be used in combination with other described features in each of the various possible combinations and permutations. A person of ordinary skill in the art would know how to use the instant invention, in combination with routine experiments, to achieve other outcomes not specifically disclosed in the examples or the embodiments.

Unless otherwise specifically defined herein, all terms are to be given their broadest possible interpretation including meanings implied from the specification as well as meanings understood by those skilled in the art and/or as defined in dictionaries, treatises, etc. Unless defined otherwise, all technical and scientific terms used herein have the same meaning as commonly understood by one of ordinary skill in the art in the field of the disclosed technology. It must also be noted that, as used in the specification and the appended claims, the singular forms "a," "an," and "the" include plural referents unless otherwise specified, and that the terms "includes" and/or "including," when used in this specification, specify the presence of stated features, elements, and/or components, but do not preclude the presence or addition of one or more other features, steps, operations, elements, components, and/or groups thereof. Additionally, methods, equipment, and materials similar or equivalent to those described herein can also be used in the practice or testing of the disclosed technology.

The devices of the present disclosure may be understood more readily by reference to the following detailed description of the embodiments taken in connection with the accompanying drawing figures, which form a part of this disclosure. It is to be understood that this application is not limited to the specific devices, methods, conditions or parameters described and/or shown herein, and that the terminology used herein is for the purpose of describing particular embodiments by way of example only and is not intended to be limiting. All spatial references, such as, for example, proximal, distal, horizontal, vertical, top, upper, lower, bottom, left and right, are for illustrative purposes only and can be varied within the scope of the disclosure. For example, the references "upper" and "lower" are relative and used only in the context to the other, and are not necessarily "superior" and "inferior."

It will further be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" may be termed likewise without departing from the teachings herein.

Various examples of the disclosed technology are provided throughout this disclosure. The use of these examples is illustrative only, and in no way limits the scope and meaning of the invention or of any exemplified form. Likewise, the invention is not limited to any particular preferred embodiment(s) described herein. Indeed, modifications and variations of the invention may be apparent to those skilled in the art upon reading this specification, and can be made without departing from its spirit and scope. The invention is therefore to be limited only by the terms of the claims, along with the full scope of equivalents to which the claims are entitled.

The present disclosure is directed to the provision of cooling holes or channels into brush seals to enable cooling air to be supplied to gas path film cooling holes located in a ceramic matrix composite (CMC) component under the brush seal. The brush seal is able to still provide effective sealing between a CMC blade outer air seal (BOAS) or CMC vane platform and the adjacent part via its bristles, and the radial face seals provided by the backing plate.

Such orifice flows from the brush seal cooling holes or channels have the additional effect of enhancing impingement cooling on non-gas path CMC surfaces of a film cooling supply plenum, and this jet impingement reduces the temperatures of non-gas path CMC surfaces. This impingement can be tailored (hole size, count spacing, diffusion, etc.) to reduce the negative structural impact caused by the induced thermal gradient.

Manufacturing of a brush seal in accordance with the present disclosure can readily be accomplished by locating the hole or channel within the weld zone utilized when bonding the bristle pack to the backing plate.

Embodiments in accordance with the present disclosure thus provide dedicated cooling flow ingress into a cavity of a CMC component by providing holes, patterns, or circuits in an adjacent (i.e., interstage) seal. Embodiments of the present disclosure allow cooling flow ingress into a circuit while also sealing the component supply air region against gaspath flow without the need for adding machined or preformed features into the CMC components which could otherwise structurally compromise the component.

While the illustrated examples and discussion below often make reference to a blade outer air seal (BOAS) and vane platforms, it should be recognized that the present disclosure is not limited to BOAS but includes any CMC component for which a cooling cavity is desirable, for example, combustion liners and turbine blades and vanes.

In the discussion below, axial refers to a direction that coincides with the longitudinal axis of the engine. Radial refers to a direction that is radial with respect to the longitudinal axis of the engine. Circumferential refers to a direction that corresponds to the circumference of a circle around the longitudinal axis of the engine. The leading edge/portion of a structure is the edge/portion that faces into the flow of the hot gases, i.e., faces upstream. The trailing edge/portion of a structure is the edge/portion that the faces away from the flow of the hot gases, i.e., faces downstream.

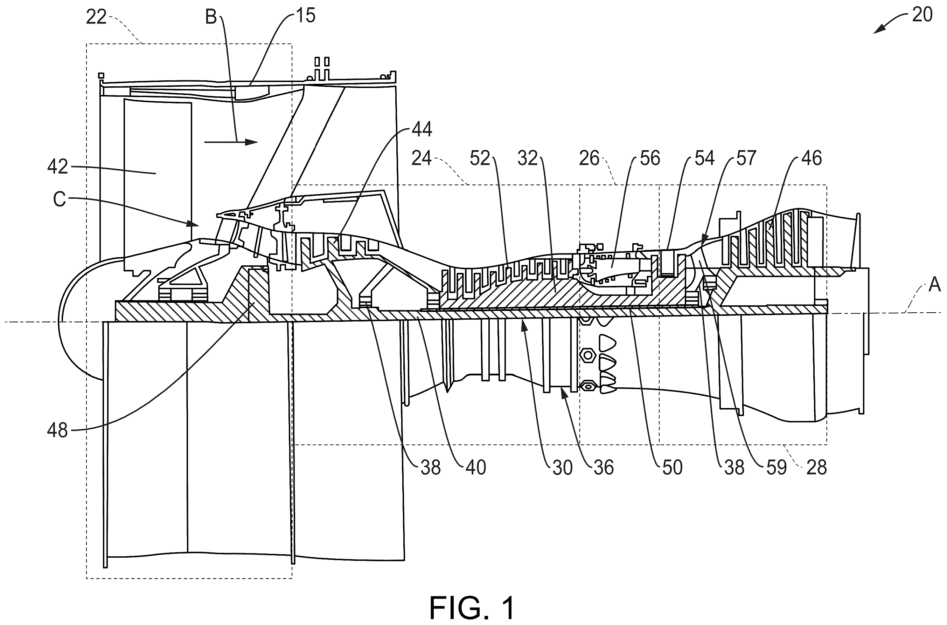

FIG. 1 schematically illustrates an example of a gas turbine engine 20 (i.e., a two-spool turbofan) which includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although FIG. 1 depicts a two-spool turbofan gas turbine engine, it should be understood that the concepts described herein are not limited to use with two-spool turbofans engines and may be applied to other types of turbine engines.

Engine 20 generally includes a low speed spool 30 and a high-speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low speed spool 30. High speed spool 32 includes an outer shaft 50 that interconnects a second (or high) pressure compressor 52 and a second (or high) pressure turbine 54. Combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low speed spool 30 and high-speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

The turbine section 28 includes at least one rotor and at least one blade extending radially outwardly from the rotor. The turbine section 28 may further include a blade outer air seal(s) (BOAS(s)). The blade outer air seal can be an assembly of a plurality of BOAS segments that together form an annular shaped shroud around the engine's central longitudinal axis A which is positioned between an outer casing of the engine and the turbine blade(s) of the turbine section.

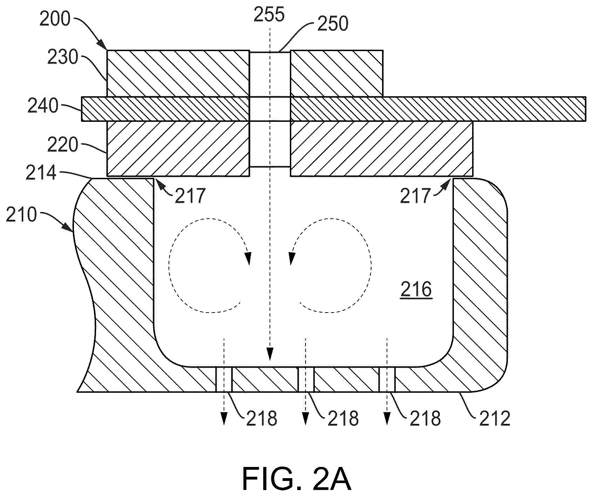

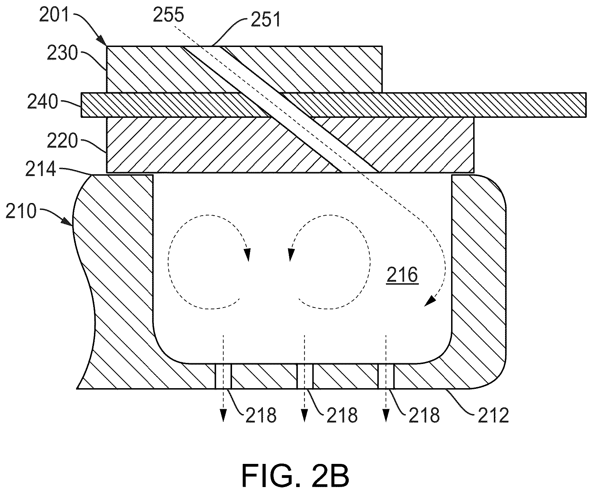

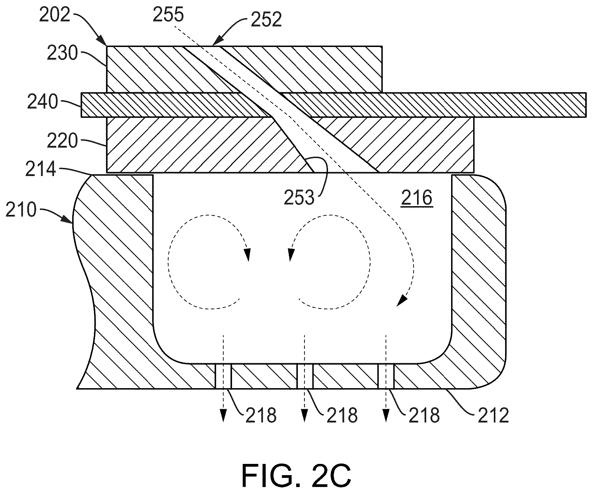

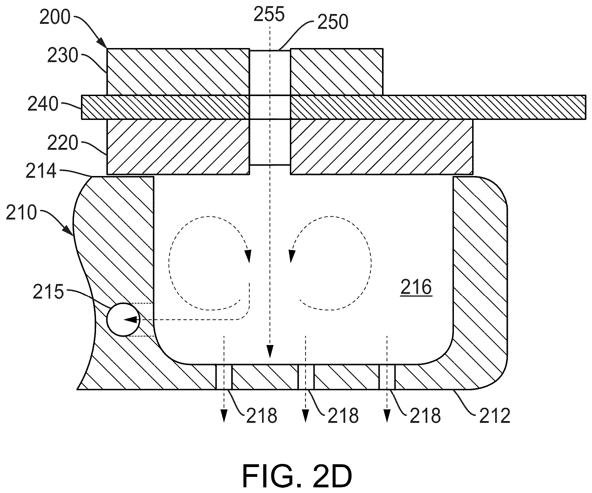

With reference to FIGS. 2A, 2B, 2C, and 2D, various embodiments of a brush seal 200, 201, or 202 in accordance with the present embodiment may be used to provide a cooling flow arrangement for a CMC component 210 of a turbine engine are illustrated, wherein like elements have the same reference numerals.

With reference to FIG. 2A, an embodiment of a brush seal 200 in accordance with the present disclosure is used with a CMC component 210 of a gas turbine engine, which in this example may be a CMC BOAS. The CMC component 210 has a hot side 212 configured for exposure to a hot gas path of the gas turbine engine and an opposing cold side 214 that has a cavity 216 formed therein for feeding a cooling flow to at least one film cooling hole 218 of the CMC component 210.

The cavity 216 may have an open top that is covered by seal 200, and may be formed in CMC component in any suitable manner, including but not limited to being initially formed in a preform or a partially-densified preform for inclusion in the densified CMC component, or being formed by machining and/or grinding of a densified CMC component. The brush seal 200 will typically include an inner diameter (ID) backing plate 220, an outer diameter (OD) backing plate 230, and a plurality of brush seal bristles 240 sandwiched between the ID backing plate 220 and the OD backing plate 230 and connected together by welding in a central welding zone. The ID backing plate 220, OD backing plate 230, and brush seal bristles 240 may be made of a suitable metal alloy such as high-temperature Ni and Co alloys. When Ni alloys are used, a coating may be provided on contacting portions of the ID backing plate 220 or CMC component 210 for compatibility reasons. The brush seal 200 will typically be formed as a split ring and may encompass multiple segments of CMC components 210, acting as an interstage seal.

The brush seal 200 contacts the cold side 214 of CMC component 210 to form a radial face seal 217. The brush seal 200 further includes at least one hole 250 forming a passage extending through the OD backing plate 230, the brush seal bristles 240, and the ID backing plate 220. The hole 250 may be any suitable channel and may be formed in the central welded zone of the brush seal 200. Although illustrated as a single passage for ease of illustration, multiple passages may also be formed without departing from the scope of the present disclosure. The hole(s) 250 may have circular or non-circular (polygonal, elliptical, irregular, etc.) cross-section, may be straight or not (i.e., curved, segmented, etc.), and/or may vary in cross-section (e.g., expanding, contracting, or combinations thereof). When a plurality of holes 250 are included, the holes 250 may be the same size or may be of different sizes, the holes 250 may be parallel or non-parallel, and/or the holes 250 may be regularly patterned or not (e.g., irregularly patterned or a combination patterns).

The hole(s) 250 of brush seal 200 allows for the ingress of a film cooling air supply 255, which may flow through hole(s) 250 and provide impingement cooling of the walls of cavity 216 that acts as a film cooling supply plenum to provide the film cooling air supply 255 to the at least one film cooling hole 218 provided in the hot side of CMC component 210.

With reference to FIG. 2B, a variation of the embodiment of FIG. 2A is illustrated, wherein an embodiment of a brush seal 201 in accordance with the present disclosure is used with a CMC component 210 of a gas turbine engine, but brush seal 201 includes a hole or holes 251 that is/are angled with respect to a plane of the radial face seal 217. Such an arrangement may provide vectored impingement cooling of film cooling air supply 255 so as to vary the cooling profile of the walls of cavity 216.

With reference to FIG. 2C, a variation of the embodiment of FIG. 2B is illustrated, wherein an embodiment of a brush seal 202 in accordance with the present disclosure is used with a CMC component 210 of a gas turbine engine, wherein brush seal 202 includes a hole or holes 252 that is/are angled with respect to a plane of the radial face seal 217, and further includes a diffused feed portion 253. Such an arrangement may expand the film cooling air supply 255 to provide a reduced amount of vectored impingement cooling so as to vary the cooling profile of the walls of cavity 216.

With reference to FIG. 2D, another variation of the embodiment of FIG. 2A is illustrated, wherein an embodiment of a brush seal 200 in accordance with the present disclosure is used with a CMC component 210 of a gas turbine engine, but in addition to feeding the film cooling air supply 255 to the at least one film cooling hole 218, the cavity 216 also feeds a portion of the air supply 255 after impingement cooling to an additional cooling circuit 215.

In one or more embodiments, the additional cooling circuit 215 may take the form of one or more mateface purge holes that may, for example, provide impingement cooling to a mateface gap being purged or may exit at the trailing edge of the component.

In one or more other embodiments, the additional cooling circuit 215 may feed a portion of air supply 255 to an adjacent cooling cavity, to an adjacent cooling circuit, or an adjacent cooling air supply plenum.

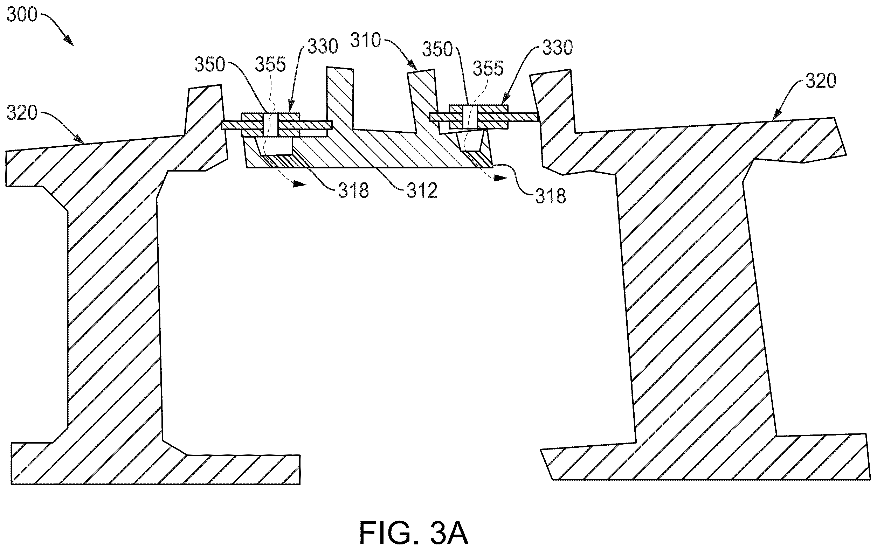

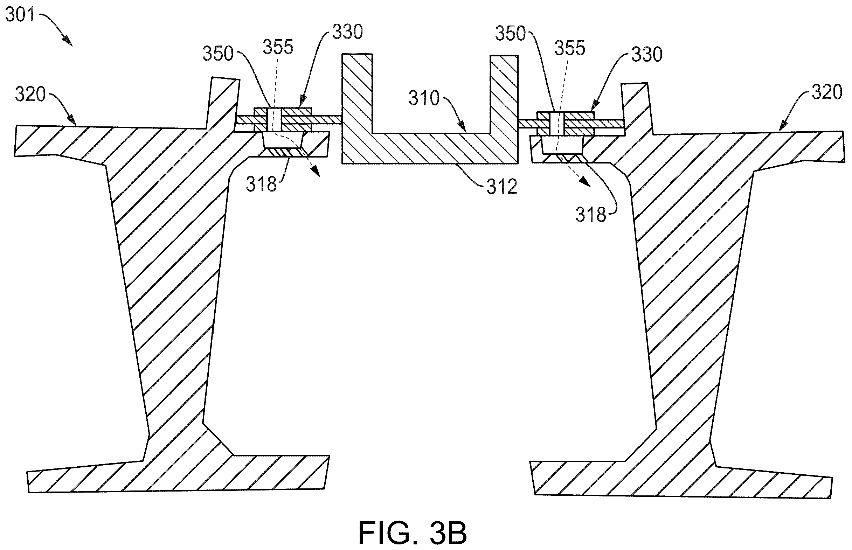

FIGS. 3A and 3B relate to two possible applications of the brush seals of FIGS. 2A-2D. Regarding FIG. 3A, a cooling flow arrangement 300 includes a pair of brush seals 330 that are configured to form face seals against a CMC BOAS 310 with a hot side 312 having film cooling holes 318. The film cooling holes 318 are fed with film cooling air supply 355 via holes 350 formed in brush seals 330 to cavities forming supply plenums in the CMC BOAS 310. The brush seal bristles of each of the brush seals 330 are configured to form a first seal against the CMC BOAS 310 and a second seal against an adjacent CMC vane platform 320.

Regarding FIG. 3B, another cooling flow arrangement 301 is illustrated. In cooling flow arrangement 301, a pair of brush seals 330 are configured to form face seals against a pair of CMC vane platforms 320 that have a hot side with film cooling holes 318. The film cooling holes 318 are fed with film cooling air supply 355 via holes 350 formed in brush seals 330 to cavities forming supply plenums in the CMC vane platforms 320. The brush seal bristles of each of the brush seals 330 are configured to form a first seal against the CMC vane platform 320 and a second seal against an adjacent CMC BOAS 310.

Thus, with respect to FIGSA. 3A and 3B, various embodiments of the present disclosure are drawn to a cooling flow arrangement 300 or 301 for a CMC component of a turbine engine, wherein the CMC component has a hot side configured for exposure to a hot gas path of the turbine engine and an opposing cold side. In each of cooling flow arrangements 300 and 301, a cavity is formed in the CMC component, the cavity having an entrance disposed on the cold side configured for receiving a cooling flow.

A brush seal 330 is disposed adjacent the cavity and the cold side of the CMC component and configured to provide a radial face seal across the cavity of the CMC component, the brush seal further comprising a plurality of brush seal bristles configured to form a first seal against the CMC component and a second seal against an adjacent CMC component. A hole 350 extends through the central portion of the brush seal 330 and is positioned to provide the cooling flow 355 to the cavity of the CMC component.

In arrangement 300 of FIG. 3A, the CMC component is a CMC BOAS 310, the adjacent CMC component is a CMC vane platform 320, and the cavity may include elements selected from a plurality of film cooling holes 318 extending from the cavity to the hot side 312 of the CMC BOAS 310, at least one conduit leading to another portion of the CMC BOAS 310, at least one conduit leading to an adjacent region of the turbine engine, and/or a conduit leading to a mateface purge hole.

In the arrangement 301 of FIG. 3B, the CMC component is a CMC vane platform 320, the adjacent CMC component is a CMC BOAS 310, and the cavity may include elements selected from a plurality of film cooling holes 318 extending from the cavity to the hot side of the CMC vane platform, at least one conduit leading to another portion of the CMC vane platform, at least one conduit leading to an adjacent region of the turbine engine, and/or a conduit leading to a mateface purge hole.

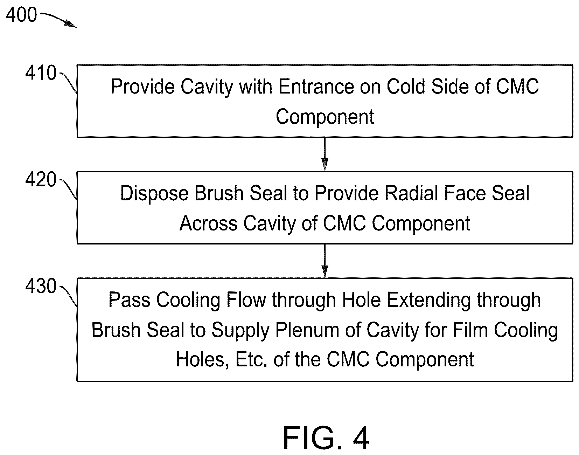

FIG. 4 is a schematic flow diagram of a method 400 of providing a cooling flow to a CMC component of a turbine engine through a brush seal. In method 400, the CMC component has a hot side configured for exposure to a hot gas path of the turbine engine and an opposing cold side.

Method 400 includes a step 410 of providing at least one cavity in the CMC component, the at least one cavity having an entrance disposed on the cold side for receiving the cooling flow.

In a next step 420, the method 400 includes disposing the brush seal adjacent the at least one cavity and the cold side of the CMC component to provide a radial face seal across the cavity of the CMC component.

Method 400 further includes step 430 of passing the cooling flow from a source through at least one hole extending through the brush seal to provide the cooling flow to the at least one cavity of the CMC component, such as for providing the flow to film cooling holes in the hot side of the CMC component. The cooling flow may also be used for supplying mateface purge holes or supplying other cooling circuits in the CMC component or an adjacent component.

In one or more embodiments, the step 410 of providing at least one cavity in the CMC component may include providing a film cooling supply plenum. In such embodiments, the step 430 of passing the cooling flow through the at least one hole may provide impingement cooling of the film cooling supply plenum and the film cooling supply plenum may feed a plurality of film cooling holes extending to the hot side of the CMC component to provide film cooling.

In accordance with the embodiments of FIGS. 2B and 2C, the step 430 of providing the cooling flow to the at least one cavity of the CMC component may include passing the cooling flow at an angle with respect to a plane of the face seal, and per FIG. 2C, the step 430 of providing the cooling flow to the at least one cavity of the CMC component may include passing the cooling flow through a diffused feed hole. In accordance with the embodiment of FIG. 2D, the step 430 of providing the cooling flow to the at least one cavity of the CMC component may include providing the cooling flow to other areas of the CMC component.

Embodiments in accordance with the present disclosure enable cooling air to be supplied to gas path film cooling holes located in a CMC component under the brush seal while still enabling effective sealing between via the bruch seal's bristles, and the radial face seals provided by the backing plate. Such orifice flows from the brush seal cooling holes in accordance with the present disclosure have the additional effect of enhancing impingement cooling on non-gas path surfaces of a film cooling supply plenum, and this jet impingement reduces the temperatures of non-gas path surfaces.

Accordingly, embodiments in accordance with the present disclosure may supply film cooling flow to regions of a BOAS or other CMC component that would otherwise have been blocked by the incorporation of the brush seal. Embodiments may accomplish this with relatively low additional manufacturing cost and/or complexity. Embodiments may also enable directed cooling approaches (impingement) to at locations that otherwise would be blocked by the incorporation of the brush seal.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A brush seal (200; 201; 202; 330) for a ceramic matrix composite (CMC) component (210; 310; 320) of a turbine engine (20), the CMC component (210; 310; 320) having a hot side (212; 312) configured for exposure to a hot gas path of the turbine engine (20) and an opposing cold side (214), comprising:
an inner diameter (ID) backing plate (220) configured to provide a radial face seal (217) across a cavity (216) in the CMC component (210; 310; 320), the cavity (216) having an entrance disposed on the cold side (214) configured for receiving a cooling flow (255; 355);
an outer diameter (OD) backing plate (230);
a plurality of brush seal bristles (240) disposed between the ID backing plate (220) and OD backing plate (230) and attached thereto in a welding zone; and
at least one hole (250; 251; 252; 350) extending through the OD backing plate (230), the brush seal bristles (240), and the ID backing plate (220) in the welding zone and positioned to provide the cooling flow (255; 355) to the cavity (216) of the CMC component (210; 310; 320).

2. The brush seal (200...330) of claim 1, wherein the at least one hole (250...350) is round and/or the at least one hole (250...350) is straight.

3. The brush seal (201; 202) of claim 1 or 2, wherein the at least one hole (250...350) is angled with respect to a plane of the radial face seal (217).

4. The brush seal (202) of claim 1, 2 or 3, wherein the at least one hole (252) includes a diffused feed portion (253) to reduce impingement cooling in the cavity (216).

5. The brush seal (200...330) of any preceding claim, wherein the at least one hole (350) is configured for impingement cooling of the cavity (216) which forms a plenum that feeds a plurality of film cooling holes (218; 318) extending to the hot side (212; 312) of the CMC component (210; 310; 320).

6. The brush seal (200...330) of any preceding claim, wherein the at least one hole (250...350) is configured for feeding a cooling flow (255; 355) for a mateface purge hole in the CMC component (210; 310; 320), and/or wherein the at least one hole (250; 350) is configured for feeding a cooling flow (255; 355) for an additional cooling circuit (215) in the CMC component (210; 310; 320) or an adjacent CMC component (210; 310; 320).

7. The brush seal (200...330) of any preceding claim, wherein the brush seal (200...330) is configured to form the radial face seal (217) against a CMC blade outer air seal (BOAS) (310) as the CMC component (310) with the cavity (216) and the plurality of brush seal bristles (240) are configured to form a first seal against the CMC BOAS (310) and a second seal against an adjacent CMC vane platform (320), or wherein the brush seal (200...330) is configured to form the radial face seal (217) against a CMC vane platform (320) as the CMC component (320) with the cavity (216) and the plurality of brush seal bristles (240) are configured to form a first seal against the CMC vane platform (320) and a second seal against an adjacent CMC blade outer air seal (BOAS) (310).

8. A method of providing a cooling flow (255; 355) to a ceramic matrix composite (CMC) component (210; 310; 320) of a turbine engine (20) through a brush seal (200; 201; 202; 330), the CMC component (210; 310; 320) having a hot side (212; 312) configured for exposure to a hot gas path of the turbine engine (20) and an opposing cold side (214), the method comprising:
providing at least one cavity (216) in the CMC component (210; 310; 320), the at least one cavity (216) having an entrance disposed on the cold side (214) for receiving the cooling flow (255; 355);
disposing the brush seal (200...330) adjacent the at least one cavity (216) and the cold side (214) of the CMC component (210; 310; 320) to provide a radial face seal (217) across the cavity (216) of the CMC component (210; 310; 320); and
passing the cooling flow (255; 355) from a source through at least one hole (250; 251; 252; 350) extending through the brush seal (200...330) to provide the cooling flow (255; 355) to the at least one cavity (216) of the CMC component (210; 310; 320).

9. The method of claim 8, wherein providing at least one cavity (216) in the CMC component (210; 310; 320) includes providing a film cooling supply plenum.

10. The method of claim 9, wherein the film cooling supply plenum feeds a plurality of film cooling holes (218; 318) extending to the hot side (212; 312) of the CMC component (210; 310; 320) to provide film cooling, and, optionally, passing the cooling flow (255; 355) through the at least one hole (250...350) provides impingement cooling of the film cooling supply plenum.

11. The method of claim 8, 9 or 10, wherein providing the cooling flow (355) to the at least one cavity (216) of the CMC component (210; 310) includes passing the cooling flow (255; 355) at an angle with respect to a plane of the face seal (217), and/or wherein providing the cooling flow (255; 355) to the at least one cavity (216) of the CMC component (210; 310; 320) includes passing the cooling flow (255; 355) through a diffused feed hole (252, 235).

12. The method of any of claims 8 to 11, wherein providing the cooling flow (255; 355) to the at least one cavity (216) of the CMC component (210; 310; 320) includes providing the cooling flow (255; 355) to an entrance conduit that feeds a hollow core configured for providing cooling flow (255; 355) to the CMC component (210; 310; 320).

13. A cooling flow arrangement (300; 301) for a ceramic matrix composite (CMC) component (210; 310; 320) of a turbine engine (20), the CMC component (210; 310; 320) having a hot side (212; 312) configured for exposure to a hot gas path of the turbine engine (20) and an opposing cold side (214), comprising:
a cavity (216) formed in the CMC component (210; 310; 320), the cavity (216) having an entrance disposed on the cold side (214) configured for receiving a cooling flow (355);
the brush seal (200...330) of clam 1 disposed adjacent the cavity (216) and the cold side (214) of the CMC component (210; 310; 320) and configured to provide a radial face seal (217) across the cavity (216) of the CMC component (210; 310; 320), the plurality of brush seal bristles (240) configured to form a first seal against the CMC component (210; 310; 320) and a second seal against an adjacent CMC component (210; 310; 320).

14. The cooling flow arrangement (301) of claim 13, wherein the CMC component (310) is a CMC blade outer air seal (BOAS) (310), the adjacent CMC component is a CMC vane platform (320), and the cavity (216) includes elements selected from a plurality of film cooling holes (218; 318) extending from the cavity to the hot side (212; 312) of the CMC BOAS (310), at least one conduit leading to another portion of the CMC BOAS (310), at least one conduit (215) leading to an adjacent region of the turbine engine (20), and/or a conduit (215) leading to a mateface purge hole.

15. The cooling flow arrangement (301) of claim 13, wherein the CMC component (320) is a CMC vane platform (320), the adjacent CMC component (310) is a CMC blade outer air seal (BOAS) (310), and the cavity (216) includes elements selected from a plurality of film cooling holes (218; 318) extending from the cavity (216) to the hot side (212; 312) of the CMC vane platform (320), at least one conduit (215) leading to another portion of the CMC vane platform (320), at least one conduit (215) leading to an adjacent region of the turbine engine (20), and/or a conduit (215) leading to a mateface purge hole.
